(19) Europäisches Patentamt
European Patent Office
Office européen des brevets

(11) **EP 2 193 226 B1**

(12) **FASCICULE DE BREVET EUROPEEN**

(45) Date de publication et mention
de la délivrance du brevet:
**25.05.2016 Bulletin 2016/21**

(21) Numéro de dépôt: **08804574.5**

(22) Date de dépôt: **23.09.2008**

(51) Int Cl.:
*C25B 1/08* (2006.01)   *C25B 9/20* (2006.01)
*C25B 15/08* (2006.01)

(86) Numéro de dépôt international:
**PCT/EP2008/062649**

(87) Numéro de publication internationale:
**WO 2009/040334 (02.04.2009 Gazette 2009/14)**

(54) **ELECTROLYSEUR HAUTE TEMPERATURE A DISPOSITIF DE RECUPERATION D'HYDROGENE**

HOCHTEMPERATURELEKTROLYSATOR MIT WASSERSTOFFRÜCKGEWINNNUNGSVORRICHTUNG

HIGH TEMPERATURE ELECTROLYSER WITH HYDROGEN RECOVERY DEVICE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.09.2007 FR 0757821**

(43) Date de publication de la demande:
**09.06.2010 Bulletin 2010/23**

(73) Titulaire: **Commissariat à l'Énergie Atomique et aux Énergies Alternatives 75015 Paris (FR)**

(72) Inventeur: **LE GALLO, Patrick 38160 Saint Appolinard (FR)**

(74) Mandataire: **Ilgart, Jean-Christophe et al BREVALEX 95, rue d'Amsterdam 75378 Paris Cedex 8 (FR)**

(56) Documents cités:
**EP-A- 1 465 278**     **US-A1- 2007 163 889**

• **J.S. HERRING ET AL.: "Hydrogen production through high-temperature electrolysis in a solid oxide cell" NUCLEAR PRODUCTION OF HYDROGEN, SECOND INFORMATION EXCHANGE MEETING ARGONNE, ILLINOIS, USA 2-3 OCTOBER 2003, 2004, pages 183-200, XP008090975**
• **D.K. RYLAND, H. LI, R.R. SADHANKAR: "Electrolytic hydrogen generation using CANDU nuclear reactors" INTERNATIONAL JOURNAL OF ENERGY RESEARCH, vol. 31, 21 mai 2007 (2007-05-21), pages 1142-1155, XP002478071**

# Description

## DOMAINE TECHNIQUE ET ART ANTÉRIEUR

La présente invention se rapporte à des réacteurs électrochimiques munis d'un dispositif de récupération d'hydrogène, notamment les électrolyseurs ou les piles à combustibles, et plus particulièrement les électrolyseurs haute température.

Un réacteur électrochimique comporte une pluralité de cellules élémentaires formées par une cathode et une anode séparées par un électrolyte, les cellules élémentaires étant raccordées électriquement en série au moyen de plaques interconnectrices interposées entre une anode d'une cellule élémentaire et une cathode de la cellule élémentaire suivante. Les plaques interconnectrices sont des composants conducteurs électroniques formés par exemple par une plaque métallique. Ces plaques assurent par ailleurs la circulation des fluides cathodiques et des fluides anodiques circulant dans des compartiments distincts.

Un tel réacteur est par exemple décrit dans le document "Hydrogen production through high-temperature electrolysis in a solid oxide cell" (J. S. Herring et al., Organization for Economic Cooperation and Development, OECD/NEA Workshop on Nuclear Production of Hydrogen, ANL, US, 2-3 October 2003.).

L'anode et la cathode sont réalisé dans un matériau poreux dans lequel les gaz peuvent s'écouler.

Par exemple, dans le cas de l'électrolyse de l'eau pour produire de l'hydrogène, de la vapeur d'eau circule au niveau de la cathode où est généré l'hydrogène sous forme gazeuse, et un gaz drainant circule au niveau de l'anode et collecte l'oxygène généré sous forme gazeuse à l'anode.

Dans les électrolyseurs haute température, le mélange gazeux introduit est très agressif pour la cathode formée par exemple en Cermet $Ni/ZrO_2$ ; ainsi pour limiter le niveau d'agressivité du mélange gazeux, on introduit de l'hydrogène sous forme gazeuse dans la vapeur d'eau avant son introduction dans l'électrolyseur afin de maintenir la cathode dans un milieu réducteur. Cette technique est relativement efficace, cependant elle n'est pas applicable à un niveau industriel, puisqu'elle nécessite notamment une source d'hydrogène supplémentaire. On cherche à obtenir un mélange en entrée comportant entre 5% et 10% d'hydrogène.

C'est par conséquent un but de la présente invention d'offrir un réacteur électrochimique adapté à un usage industriel dans lequel le niveau d'agressivité de l'environnement des cathodes est réduit.

## EXPOSÉ DE L'INVENTION

Le but précédemment énoncé est atteint par un réacteur électrochimique comportant des moyens aptes à récupérer une partie de l'hydrogène produit au niveau des cathodes du réacteur électrochimique pour enrichir la vapeur d'eau circulant au niveau de celles-ci afin de réduire le niveau d'agressivité du milieu entourant les cathodes.

Plus particulièrement, on récupère l'hydrogène qui migre naturellement vers les anodes jouxtant les cathodes à travers les plaques interconnectrices. Ainsi l'apport en hydrogène extérieur peut être réduit.

En d'autres termes, on dispose un compartiment dans la plaque interconnectrice pour récupérer une partie de l'hydrogène généré à la cathode en contact avec la plaque collectrice et l'envoyer en entrée de la cathode pour réduire l'agressivité du milieu dans lequel se trouve la cathode. Les plaques interconnectrices sont donc également des plaques de collecte d'hydrogène.

Cet hydrogène étant celui qui est perdu naturellement par les fuites, sa collecte ne réduit donc pas la quantité d'hydrogène récupérée en sortie de l'électrolyseur.

Pour cela, le réacteur électrochimique utilise des plaques interconnectrices comportant une chambre interne séparée du compartiment cathodique et du compartiment anodique par des parois, l'hydrogène selon le principe de perméation à travers un matériau par différence de concentration va migrer à travers la paroi côté cathode dans la chambre. L'hydrogène se trouvant ainsi dans la chambre est ensuite collecté pour être mélangé à la vapeur d'eau gazeuse.

Selon un autre mode de réalisation, de la vapeur d'eau circule dans la plaque interconnectrice et s'enrichit donc simultanément de l'hydrogène collecté dans la chambre. Cette vapeur d'eau est ensuite introduite directement dans le compartiment cathodique en contact avec la plaque interconnectrice. La taille du circuit et sa complexité sont alors réduites.

On peut également prévoir de faire circuler un gaz non oxydant, type hélium dans la plaque interconnectrice pour évacuer l'hydrogène, le mélange avec la vapeur d'eau s'effectuant à l'extérieur de la plaque.

La présente invention a alors principalement pour objet un réacteur électrochimique comportant un empilement d'une pluralité de cellules d'électrolyse élémentaires, chaque cellule étant formée d'une cathode, d'une anode et d'un électrolyte disposé entre la cathode et l'anode, une plaque interconnectrice étant interposée entre chaque anode d'une cellule élémentaire et une cathode d'une cellule élémentaire suivante, ladite plaque interconnectrice étant en contact électrique avec l'anode et la cathode, et comportant au moins un compartiment cathodique et au moins un compartiment anodique pour la circulation de fluide à la cathode et l'anode respectivement, caractérisé en ce que la plaque interconnectrice comporte en outre au moins une chambre de collecte d'au moins un gaz généré à la cathode séparée du compartiment cathodique et du compartiment anodique par des première et deuxième parois respectivement, au moins ladite première paroi ayant une épaisseur permettant la diffusion du gaz à travers ladite première paroi du compartiment cathodique vers la chambre.

La première paroi a avantageusement une épaisseur inférieure à 200 $\mu$m, assurant une bonne diffusion du gaz à travers la paroi.

Le réacteur électrochimique selon la présente invention est particulièrement adapté pour produire de l'hydrogène par électrolyse de l'eau, de la vapeur d'eau circulant alors dans la cathode, le gaz diffusant à travers la première paroi étant de l'hydrogène.

Dans un exemple particulièrement avantageux, la chambre est connectée en entrée à une source de vapeur d'eau et en sortie du compartiment cathodique en contact avec la première paroi, ainsi la vapeur d'eau est enrichie simultanément à la collecte d'hydrogène.

Dans un autre exemple, la chambre est connectée en entrée à une source de gaz non oxydant, par exemple de l'hélium et en sortie à des moyens de collecte du gaz drainant et de l'hydrogène.

On peut également prévoir de manière avantageuse que la deuxième paroi soit étanche à l'hydrogène gazeux afin d'éviter les fuites d'hydrogène de la chambre de collecte vers le compartiment anodique.

Les cathodes et anodes sont avantageusement en matériau poreux et l'électrolyte est solide.

Le réacteur électrochimique selon la présente invention est particulièrement adapté à fonctionner à des hautes températures supérieures à 700°C.

**BRÈVE DESCRIPTION DES DESSINS**

La présente invention sera mieux comprise à l'aide de la description qui va suivre et des dessins annexés sur lesquels :

- la figure 1 est une vue de côté d'un exemple de réalisation d'un électrolyseur selon la présente invention,
- la figure 2 est une vue en coupe de l'électrolyseur la figure 1 selon un plan A-A,
- la figure 3 est une vue de face d'un autre exemple de réalisation d'un électrolyseur selon la présente invention.

**EXPOSÉ DÉTAILLÉ DE MODES DE RÉALISATION PARTICULIERS**

Dans la description qui va suivre, un électrolyseur de l'eau pour produire de l'hydrogène va être décrit à titre d'exemple. Cependant l'invention s'applique à tout autre réacteur électrochimique comme une pile à combustible.

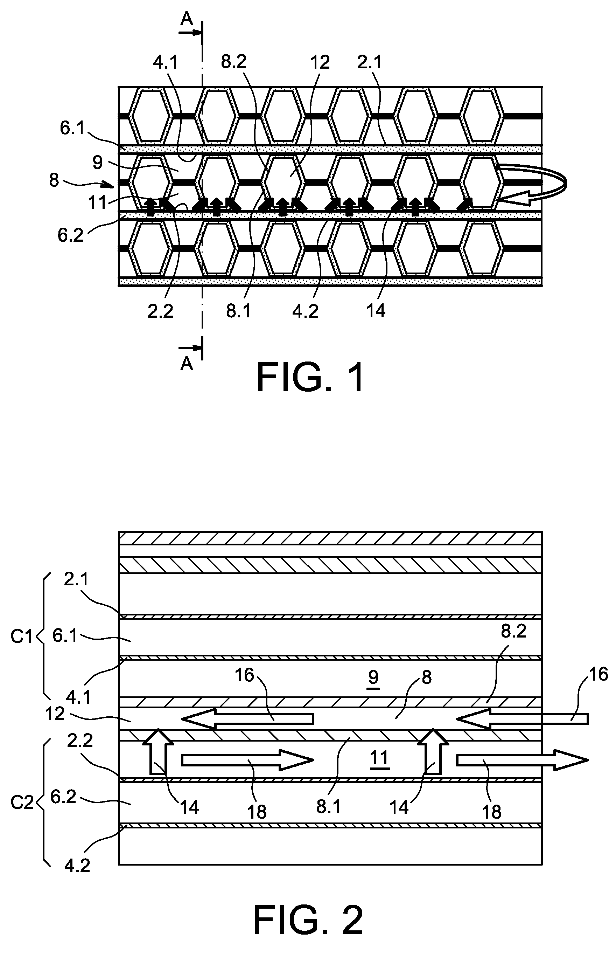

Sur la figure 1, on peut voir un exemple de réalisation d'un électrolyseur selon la présente invention comportant une pluralité de cellules électrochimiques élémentaires C1, C2..., empilées.

Chaque cellule élémentaire comporte un électrolyte disposé entre une cathode et une anode.

Dans la suite de la description nous décrirons en détail les cellules C1 et C2 et leur interface.

La cellule C1 comporte une cathode 2.1 et une anode 4.1 entre lesquelles est disposé un électrolyte 6.1, par exemple solide généralement d'épaisseur 100 $\mu$m.

La cellule C2 comporte une cathode 2.2 et une anode 4.2 entre lesquelles est disposé un électrolyte 6.2.

Les cathodes 2.1, 2.2 et les anodes 4.1, 4.2 sont réalisées en matériau poreux et ont par exemple une épaisseur de 40 $\mu$m.

L'anode 4.1 de la cellule C1 est reliée électriquement à la cathode 2.2 de la cellule C2 par une plaque interconnectrice 8 venant en contact avec l'anode 4.1 et la cathode 2.2. Par ailleurs, elle permet l'alimentation électrique de l'anode 4.1 et de la cathode 2.2.

Une plaque interconnectrice est interposée entre deux cellules élémentaires, plus précisément entre une anode d'une cellule élémentaire et la cathode de la cellule adjacente. Cette plaque définit avec l'anode et la cathode adjacentes des canaux pour la circulation de fluides. Ils définissent des compartiments anodiques 9 dédiés à la circulation des gaz au niveau de l'anode et des compartiments cathodiques 11 dédiés à la circulation des gaz au niveau de la cathode, ceux-ci étant particulièrement visibles sur la figure 2.

Selon la présente invention, la plaque interconnectrice 8 comporte au moins une chambre de collecte 12 d'hydrogène sous forme gazeuse généré à la cathode 2.2.

Dans l'exemple représenté, la plaque interconnectrice comporte une pluralité de chambres de collecte 12 et une pluralité de compartiments anodiques et cathodiques. De manière avantageuse, les chambres 12 et les compartiments ont des sections hexagonales, en nid d'abeille, ce qui permet d'augmenter la densité de compartiments 9, 11 et de chambres 12.

Par exemple, la plaque interconnectrice 8 comporte une première tôle 8.1 en contact avec la cathode 2.2 et une deuxième tôle 8.2 en contact avec l'anode 4.1, les tôles 8.1 et 8.2 ménageant un espace intérieur ou chambre de collecte 12. Les tôles 8.1 et 8.2 ménagent également avec la cathode 2.2 et l'anode 4.1 les compartiments cathodiques 11 et anodiques 9 respectivement.

La première tôle 8.1 en contact avec la cathode 2.2 est prévue suffisamment fine pour permettre une bonne diffusion de l'hydrogène à travers la tôle 8.1 du côté cathode 2.2 vers l'espace 12. L'épaisseur de la tôle 8.2 est avantageusement choisie de telle sorte qu'elle limite la diffusion de l'hydrogène de la chambre 12 vers l'anode 4.1.

L'épaisseur de la tôle 8.1 est par exemple inférieure à 1 mm et de manière avantageuse inférieure à 200 $\mu$m, et de manière encore plus avantageuse de l'ordre de 100 $\mu$m.

La chambre 12 est connectée à une entrée (non représentée) de fluide gazeux et de l'autre à une sortie (non représentée) pour évacuer l'hydrogène.

Nous allons maintenant expliquer le fonctionnement de la présente invention.

La présente invention utilise le principe de perméation à travers un matériau, notamment un métal par différence de concentration.

Dans le cas de la présente invention, la concentration en hydrogène à la cathode est très supérieure à celle dans le volume 12 de la plaque interconnectrice 8, par conséquent l'hydrogène sous forme gazeuse produit à la cathode 2.2 va naturellement diffuser à travers la première tôle 8.1, dont l'épaisseur est telle qu'elle permet une telle diffusion. La chambre 12 va donc s'enrichir en hydrogène sous forme gazeuse. Cette diffusion est représentée par les flèches 14.

Il est à noter que dans le cas des électrolyseurs industriels, la surface des plaques interconnectrices est de l'ordre de plusieurs centaines de cm$^2$ et que leur épaisseur est réduite pour limiter l'encombrement, par conséquent le phénomène de diffusion sera d'autant plus présent. La présente invention est donc particulièrement avantageuse dans ce type d'électrolyseur de grande taille.

Simultanément, la concentration en hydrogène à l'anode 4.1 étant très inférieure à celle dans la chambre 12, celui-ci va également diffuser à travers la deuxième tôle 8.2 pour se recombiner avec l'oxygène pour former de la vapeur. Ce phénomène de diffusion vers l'anode 4.1 est cependant réduit, par rapport aux électrolyseurs existants, puisque la pression partielle d'hydrogène dans la chambre 12 est inférieure à celle à la cathode 2.2.

On peut alors prévoir de faire circuler la vapeur d'eau directement dans la chambre 12. Pour cela, la chambre 12 est raccordée à l'alimentation en eau, la vapeur d'eau s'enrichit donc directement en hydrogène au sein de l'électrolyseur, et est envoyée directement dans la cathode 2.2. Le circuit de circulation de la vapeur d'eau est donc réduit. La circulation de vapeur d'eau est représentée par les flèches 16 pour la circulation dans la plaque interconnectrice 8 et par les flèches 18 pour la circulation dans la cathode 2.2.

On cherche à obtenir une vapeur d'eau comportant 5% à 10% d'hydrogène afin d'obtenir un milieu suffisamment réducteur pour la cathode. Si ce pourcentage est obtenu directement par diffusion de l'hydrogène à travers la première tôle 8.1, la vapeur d'eau introduite dans la chambre 12 peut être de la vapeur d'eau non enrichie préalablement. Si, par contre, le pourcentage d'hydrogène est inférieur à celui souhaité, on peut introduire de la vapeur d'eau déjà enrichie. La quantité d'hydrogène à apporter préalablement est alors réduite, par rapport aux techniques de l'état de la technique.

On peut également prévoir de faire circuler dans la chambre 12 un gaz de manière à drainer l'hydrogène diffusant dans la chambre 12. Ce gaz est avantageusement non oxydant, par exemple de l'hélium. Ce gaz enrichi en hydrogène est alors soit mélangé directement à de la vapeur d'eau en entrée des compartiments cathodiques, soit collecté pour séparer l'hydrogène du gaz drainant.

La plaque interconnectrice 8 peut être également réalisée en utilisant une plaque massive dans laquelle est usiné un réseau de canaux, des plaques fines étant disposées de part et d'autre de la plaque massive, venant en contact avec la cathode et l'anode. La plaque en contact avec la cathode est prévue suffisamment fine pour permettre la diffusion de l'hydrogène en direction des canaux.

Il est préférable de faire circuler un fluide dans la chambre 12 pour collecter l'hydrogène et non de collecter de l'hydrogène pur en sortie de la chambre 12 ce qui serait néfaste à la diffusion. En effet la concentration en hydrogène dans la chambre 12 deviendrait alors proche de celle à la cathode, limitant le phénomène de diffusion.

Un gaz drainant peut également circuler dans l'anode afin de collecter l'oxygène généré dans celle-ci.

De manière avantageuse, on prévoit que chaque plaque interconnectrice 8 comporte au moins une chambre de collecte de l'hydrogène par diffusion, afin de pouvoir enrichir la vapeur d'eau circulant dans chaque compartiment cathodique par l'hydrogène récupéré dans la plaque adjacente.

La présente invention présente donc l'avantage d'utiliser les fuites d'hydrogène ayant lieu naturellement des compartiments cathodiques vers les compartiments anodiques à travers la plaque interconnectrice 8, afin d'augmenter la durée de vie de la cathode.

En outre, elle permet d'utiliser l'hydrogène produit dans l'électrolyseur évitant de recourir à une source extérieure ou à des moyens spécifiques pour utiliser celui produit dans l'électrolyseur, notamment des moyens de refroidissement, de compression à la pression d'alimentation, qui sont consommateurs d'énergie et qui sont coûteux et encombrants. L'invention permet donc de réduire, voire de supprimer le circuit de recirculation.

Par ailleurs, l'hydrogène contenu dans l'électrolyseur étant déjà à la température de l'empilement des cellules élémentaires, il n'est pas nécessaire de l'échauffer pour éviter des chocs thermiques.

L'électrolyseur selon la présente invention est donc plus compact, de réalisation plus simple et donc de coût de revient réduit et est, par ailleurs moins consommateur en énergie que les électrolyseurs de l'état de la technique.

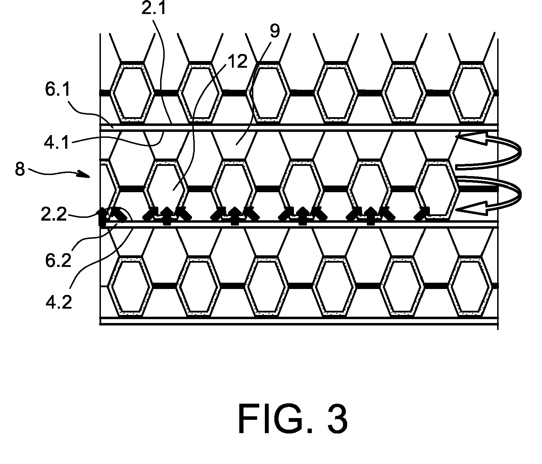

Sur la figure 3, on peut voir une variante de réalisation de l'électrolyseur des figures 1 et 2, dans lequel il est prévu des canaux 20 pour la circulation du gaz drainant avant son injection sur les anodes, cette circulation préalable dans l'électrolyseur permet de réchauffer le gaz.

A titre d'exemple, nous allons calculer le flux molaire d'hydrogène en mol.m$^{-2}$.s$^{-1}$ à travers une tôle de 200 $\mu$m d'épaisseur.

$$\Phi_\infty = \frac{P_e \sqrt{P_{H_2}}}{eVm} \, ,$$

dans lequel

$\Phi_\infty$ est le flux molaire d'hydrogène en mol.m$^{-2}$.s$^{-1}$ ;
P$_e$ est le coefficient de perméation en m$^3$.m.m$^{-2}$P$^{-1/2}$ ;
P$_{H2}$ est la pression partielle d'hydrogène en P$_a$ ;
E est l'épaisseur de la tôle 8.1 en m ;
V$_m$ est le volume molaire : 22, 4.10$^{-3}$m$^3$.mol$^{-1}$.

Nous choisissons pour la tôle un matériau ferritique, dans ce cas avec un coefficient obtenu expérimentalement .

$$P_e = 5,50 \times 10^{-8} \exp(-\frac{41800}{RT})$$

Avec R étant la constante des gaz parfaits : 8,31 J.mol$^{-1}$.K$^{-1}$ et T la température en K.

Ainsi pour une plaque de 200 $\mu$m d'épaisseur, à une température de 800°C et une pression partielle d'hydrogène de 10$^5$ Pa, on obtient $\Phi_\infty$ = 5, 58.10$^{-2}$ mol$^{-1}$.m$^{-2}$.s$^{-1}$, ce qui correspond à quelques pourcents du flux d'hydrogène fabriqué.

Les dimensions des circuits de la chambre 12 réalisée dans la plaque interconnectrice sont du même ordre de grandeur que celles du compartiment cathodique, puisque c'est la même quantité de fluide à une vitesse sensiblement égale qui circule dans la plaque interconnectrice et le compartiment cathodique.

La collecte de l'hydrogène diffusant à travers la plaque interconnectrice a été décrite, mais toute collecte de l'hydrogène par diffusion à tout endroit de l'électrolyseur ne sort pas du cadre de la présente invention.

Les parois de la plaque interconnectrice sont par exemple réalisées en Haynes® 230, Inconel®600 ou en Crofer®22APU.

## Revendications

1. Réacteur électrochimique comportant un empilement d'une pluralité de cellules d'électrolyse élémentaires (C1, C2), chaque cellule (C1, C2) étant formée d'une cathode (2.1, 2.2), d'une anode (4.1, 4.2) et d'un électrolyte (6.1, 6.2) disposé entre la cathode (2.1, 2.2) et l'anode (4.1, 4.2), une plaque interconnectrice (8) étant interposée entre chaque anode (4.1) d'une cellule élémentaire (C1) et une cathode (2.2) d'une cellule élémentaire suivante (C2), ladite plaque interconnectrice (8) étant en contact électrique avec l'anode (4.1) et la cathode (2.2), et comportant au moins un compartiment cathodique et au moins un compartiment anodique pour la circulation de fluide à la cathode et l'anode respectivement, **caractérisé en ce que** la plaque interconnectrice (8) comporte en outre au moins une chambre de collecte (12) d'au moins un gaz généré à la cathode (2.2) séparée du compartiment cathodique (4) et du compartiment anodique (9) par des première (8.1) et deuxième (8.2) parois respectivement, ladite première paroi (8.1) ayant une épaisseur permettant la diffusion du gaz à travers ladite première paroi (8.1) du compartiment cathodique (11) vers la chambre (12).

2. Réacteur électrochimique selon la revendication 1, dans lequel la première paroi (8.1) a une épaisseur inférieure à 200 $\mu$m.

3. Réacteur électrochimique selon la revendication 1 ou 2, pour produire de l'hydrogène par électrolyse de l'eau, de la vapeur d'eau circulant dans la cathode (2.2), le gaz diffusant à travers la première paroi (8.1) étant de l'hydrogène.

4. Réacteur électrochimique selon la revendication 3, dans lequel la chambre (12) est connectée en entrée à une source de vapeur d'eau et en sortie au compartiment cathodique (11) en contact avec la première paroi (8.1).

5. Réacteur électrochimique selon la revendication 3, dans lequel la chambre (12) est connectée en entrée à une source de gaz drainant non oxydant, par exemple de l'hélium et en sortie à des moyens de collecte du gaz drainant et de l'hydrogène.

6. Réacteur électrochimique selon l'une des revendications 1 à 5, dans lequel la deuxième paroi est étanche à l'hydrogène gazeux.

7. Réacteur électrochimique selon l'une des revendications précédentes, dans lequel les cathodes (2.1, 2.2) et anodes (4.1, 4.2) sont en matériau poreux et l'électrolyte (6.1, 6.2) est solide.

8. Réacteur électrochimique selon l'une des revendications 1 à 7 destiné à fonctionner à des hautes températures supérieures à 700°C.

## Patentansprüche

1. Elektrochemischer Reaktor, umfassend einen Stapel aus einer Vielzahl von Elektrolyseeinzelzellen (C1, C2), wobei jede Zelle (C1, C2) gebildet ist aus einer Kathode (2.1, 2.2), einer Anode (4.1, 4.2) und einem Elektrolyt (6.1, 6.2), der zwischen der Kathode (2.1, 2.2) und der Anode (4.1, 4.2) angeordnet ist, eine Verbindungsplatte (8), die zwischen jeder Anode (4.1) einer Einzelzelle (C1) und einer Kathode (2.2) einer folgenden Einzelzelle (C2) eingebaut ist, wobei die Verbindungsplatte (8) in elektrischem Kontakt ist mit der Anode (4.1) und der Kathode (2.2), und umfassend mindestens eine Kathodenkammer und mindestens eine Anodenkammer zur Zirkulation von Fluid an der Kathode bzw. der Anode, **dadurch gekennzeichnet, dass** die Verbindungsplatte (8) weiterhin eine Sammelkammer (12) aufweist für mindestens ein Gas, das an der Kathode (2.2) erzeugt wird, getrennt von der Kathodenkammer (4) und der Anodenkammer (9) durch erste (8.1) bzw. zweite (8.2) Wände, wobei die erste Wand (8.1) eine Dicke aufweist, die die Diffusion von Gas durch die erste Wand (8.1) der Kathodenkammer (11) in Richtung Kammer (12) erlaubt.

2. Elektrochemischer Reaktor nach Anspruch 1, worin die erste Wand (8.1) eine Dicke von weniger als 200 $\mu$m aufweist.

3. Elektrochemischer Reaktor nach Anspruch 1 oder 2 zum Herstellen von Wasserstoff durch Elektrolyse von Wasser, aus Wasserdampf, der in der Kathode (2.2) zirkuliert, wobei das Gas, das durch die erste Wand (8.1) diffundiert, Wasserstoff ist.

4. Elektrochemischer Reaktor nach Anspruch 3, worin die Kammer (12) am Eingang verbunden ist mit einer Wasserdampfquelle und am Ausgang der Kathodenkammer (11) in Kontakt mit der ersten Wand (8.1) ist.

5. Elektrochemischer Reaktor nach Anspruch 3, worin die Kammer (12) am Eingang verbunden ist mit einer Quelle für nichtoxidierendes Drainagegas, z.B. Helium, und am Ausgang mit Sammelmitteln für drainierendes Gas und Wasserstoff.

6. Elektrochemischer Reaktor nach einem der Ansprüche 1 bis 5, worin die zweite Wand dicht gegenüber gasförmigem Wasserstoff ist.

7. Elektrochemischer Reaktor nach einem der vorhergehenden Ansprüche, worin die Kathoden (2.1,2.2) und Anoden (4.1,4.2) aus porösem Material sind und der Elektrolyt (6.1,6.2) fest ist.

8. Elektrochemischer Reaktor nach einem der Ansprüche 1 bis 7, der dafür vorgesehen ist bei hohen Temperaturen über 700 °C zu arbeiten.

## Claims

1. Electrochemical reactor comprising a stack of a plurality of elementary electrolysis cells (C1, C2), each cell (C1, C2) being formed of a cathode (2.1, 2.2), an anode (4.1, 4.2) and an electrolyte (6.1, 6.2) provided between the cathode (2.1, 2.2) and the anode (4.1, 4.2), an interconnection plate (8) being interposed being each anode (4.1) of an elementary cell (C1) and a cathode (2.2) of a following elementary cell (C2), said interconnection plate (8) being in electric contact with the anode (4.1) and the cathode (2.2), and comprising at least one cathodic compartment and at least one anodic compartment for the circulation of fluid to the cathode and the anode respectively, **characterised in that** the interconnection plate (8) further comprises at least one chamber (12) for collecting at least one gas generated at the cathode (2.2) separated from the cathodic compartment (4) and the anodic compartment (9) by first (8.1) and second (8.2) walls respectively, said first wall (8.1) having a thickness allowing the diffusion of the gas through said first wall (8.1) from the cathodic compartment (11) to the chamber (12).

2. Electrochemical reactor according to claim 1, wherein the first wall (8.1) has a thickness less than 200 $\mu$m.

3. Electrochemical reactor according to claim 1 or 2, for producing hydrogen by electrolysis of water, water vapour circulating in the cathode (2.2), the gas diffusing through the first wall (8.1) being hydrogen.

4. Electrochemical reactor according to claim 3, wherein the chamber (12) is connected at the input to a source of water vapour and at the output to the cathodic compartment (11) in contact with the first wall (8.1).

5. Electrochemical reactor according to claim 3, wherein the chamber (12) is connected at the input to a source of non oxidising draining gas, for example helium, and at the output to means for collecting the draining gas and hydrogen.

6. Electrochemical reactor according to one of claims 1 to 5, wherein the second wall is leak tight to gaseous hydrogen.

7. Electrochemical reactor according to one of the preceding claims, wherein the cathodes (2.1, 2.2) and anodes (4.1, 4.2) are made of porous material and the electrolyte (6.1, 6.2) is solid.

8. Electrochemical reactor according to one of claims 1 to 7 intended to operate at high temperatures above 700°C.

FIG. 1

FIG. 2

# FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. S. HERRING et al.** Hydrogen production through high-temperature electrolysis in a solid oxide cell. *Organization for Economic Cooperation and Development, OECD/NEA Workshop on Nuclear Production of Hydrogen, ANL, US,* 02 Octobre 2003